# EUROPEAN PATENT SPECIFICATION

(11) **EP 2 978 509 B1**
(45) Date of publication and mention of the grant of the patent: **10.05.2017**
(21) Application number: 15753299.5
(22) Date of filing: 22.04.2015
(51) Int. Cl.: A63B 22/20, A63B 23/00, A61H 15/00, F16B 12/44, A61H 1/02

(54) **EXERCISE ROLLER DEVICE WITH REMOVABLY FIXABLE SUPPORT**
ÜBUNGSROLLERVORRICHTUNG MIT LÖSBAR BEFESTIGBAREM TRÄGER
DISPOSITIF DE ROULEAU D'EXERCICE DOTÉ D'UN SUPPORT POUVANT ÊTRE FIXÉ DE MANIÈRE AMOVIBLE

(30) Priority: 28.04.2014 FI 20145392
(43) Date of publication of application: 03.02.2016
(73) Proprietor: Omavalmentaja Kajaani Oy, 87400 Kajaani (FI)
(72) Inventor: VALLO, Pekka, FI-87100 Kajaani (FI); HAATAJA, Atte, FI-87100 Kajaani (FI)
(74) Representative: Heinonen & Co
(86) International application number: PCT/FI2015/050279
(87) International publication number: WO 2015/166138

(56) References cited:
- CN-U- 203 483 792
- CN-Y- 201 200 762
- DE-A1- 1 478 019
- DE-A1- 2 454 924
- GB-A- 424 390
- US-A- 3 845 952
- US-A- 4 893 813
- US-A1- 2010 022 362
- US-A1- 2013 096 472
- US-B1- 6 422 982

## Description

### Technical field

Generally, the invention relates to exercise and massage devices finding particular use in muscle maintenance and rehabilitation. The invention relates particularly to portable exercise devices.

### Background technology

Muscle maintenance of athletes and persons in general comprises of all active and passive measures directed to accelerate a person's physical and mental recovery after physical exercise, to prevent acute and strain injuries, to attain an optimal relaxation and to enable a person to adopt an economic, efficient and an injury preventative way of exercising her body.

Various devices have been used as an aid to practice muscle maintenance. In particular, an approach advocated by many has been to roll one's back over a roller of various prescribed shapes while in a supine position. This method has the commendable goal of forced articulation of the vertebrae and stimulating the metabolism and stretching of exercised muscular groups and to massage the critical muscles, tendon, ligaments and articulations in a specific body region. While widely used and often portable, light and convenient, this category of exercise rollers finds a somewhat narrow field of application because of the limited exercise positions they provide, if an ergonomic exercise posture is to be maintained. This is true especially in case of exercise lower and upper extremities.

There exists various elevated and supported exercise devices containing one or more rollers or other rotatably or slideably mounted arrangements to direct a force or pressure to a specific body region with a similar goal as described above. While more versatile than a mere exercise roller, these exercise devices are often heavy fixedly placed equipment not meant to be portable and necessitating to reserve a considerable floor area for their placement, use and storage.

Some examples of such prior art solutions are presented in the following applications.

US6422982 describes a massaging device comprising a hollow cylindrical roller and two supporting feet each having a first and a second support.

CN 201 200 762 Y presents an exercise roller for massage and fitness exercises. The exercise roller comprises a roller which is elevated from the ground with a supporting rack in relation to which the roller may also rotate.

CN 203 483 792 U presents a roller device for exercising the waist of a person. The exercise roller comprises a roller which is elevated from the ground with two supporting columns.

Other devices exist, which being either directed at a special or more versatile purpose, depend upon a separate operator of the device. In case of these devices, to receive the exercise or massage effect of the device, the person being object for the treatment at least partially relies on the actions of the one or more persons operating the device.

### Summary of the invention

It is an object of the present invention to implement such a solution, that previously mentioned drawbacks of the prior art could be diminished. In particular, the invention discloses a device for exercise being at the same time portable and light, versatile and ergonomic and further operable by the user herself. A further object of the present invention is a device constituting of a roller within which the other parts constituting supporting feet can be stored for storage and transport, further this roller utilizable as ordinary rollers, and the support fixable rotatably to the roller by the user without any required tools yielding an elevated roller offering a versatile and ergonomic exercise device. Even further, the device according to the present invention is an exercise roller, that can be elevated to one or more heights from the supporting ground by fixing a first and a second support of the supporting feet to one or more predetermined relative angles. Utilizing supports of different lengths, adjustable for different lengths or having removable fixable sections, the roller can further be elevated at predetermined tilting angles to enable further exercise opportunities and positions in a user safe manner.

The objective of the invention is met by the features disclosed in the independent patent claim.

In accordance to one aspect of the present invention A massaging device, comprising:
- a hollow cylindrical roller,
- two supporting feet each having a first and a second support,
characterized in that the device further comprises:
- two end plates fixable to the opposite ends of said roller wherein at least one of the end plates is removably fixed, the inner envelope of the roller and the end plates essentially defining a cavity and each of the end plates further comprising essentially centrally situated bearing arrangement, and that
- the first and the second support of the supporting feet are alignable at the end plates to set said supports at an angle relative to each other, and each of the supporting feet being removably fixable at their corresponding end of the roller by a fastening arrangement so that the supporting feet are at least functionally connected to the bearing arrangements of the associated end plates and the roller being rotatably fixed to or in relation the supporting feet and wherein the rotation is done in relation to two separate axles at each end of the roller, and wherein the supports may be stored inside said cavity.

According to an embodiment of the present invention the roller is rotatably fixed to or in relation to the supporting feet such that rotation in relation to said feet is possible. The roller may be rotatably fixed via the end plates fixed to the roller, which end plates may rotate around the bearing arrangement and the roller accordingly.

According to an embodiment of the present invention the cylindrical roller is essentially a tubular element that is suitable for exercise roller, foam roller and such form of exercising purposes. In other words, the cylindrical roller referred to herein may comprise a tubular or cylindrical element comprising one or more materials. According to an embodiment of the present invention the end plates may constitute plates or similar structures. Further said plates may be of any size in relation to the inner envelope (geometry) of the roller. Preferably they are however such that they or their adverse surfaces (when fixed to the roller) seal the envelope to essentially constitute a closed cavity. However, the cavity may be also partially open from the sides of the end plates.

According to an embodiment of the present invention the end plates may comprise openings in communication with the radially innermost surface of the bearing arrangement.

According to an embodiment or the present invention the supports may be alignable to a predefined angle, such as at one or more predefined angles, relative to each other. According to another embodiment the supports may be alignable to practically any angle in the structural/physical limitations of the device to allow for essentially stepless adjustment and selection of the angle. Such may be done with e.g. by having a friction joint arrangement between the supports.

According to an embodiment of the present invention the fastening arrangement with which the supporting feet are fixable at the ends of the roller may attach to the radially innermost surface of the bearing arrangement of the associated end plate.

According to an embodiment of the present invention the supporting feet are at least functionally connected to the bearing arrangements of the associated end plates and the roller being rotatably fixed to the supporting feet and fastening arrangements by the mediation of the bearing arrangements of the associated end plate.

According to an embodiment of the present invention at least one of the end plates of the device may be removably fixed to the roller to allow access to the cavity and the dimensions of the supports, which are chosen in relation to said cavity, to allow upon removal of the fastening arrangements and said at least one end plate to insert said supports within the cavity for e.g. storage or transport.

According to an embodiment of the present invention the radially innermost surface of the bearing arrangement is the inner surface of a hollow tube connecting the two associated end plates.

According to another embodiment of the present invention the radially innermost surface of the bearing arrangement is the outer surface of a shaft connecting the two associated end plates.

According to yet another embodiment of the present invention the radially innermost surface of the bearing arrangement is a surface of the innermost part of a concentric bearing confined in the associated end plate.

According to an embodiment of the present invention the fastening arrangement may be operable by a user directing a rotating or translating force at the fastening arrangement in one direction to shorten a relative distance between a first and a second part of said fastening arrangement causing compression of length and expansion of width of an elastic member residing between said first and second part. Further the rotating or translating force at the fastening arrangement in the one direction causes fixing of the fastening device relative to the radially innermost surface of the bearing arrangement by friction between the expanded elastic member and the radially innermost surface of the bearing arrangement and further fixing the supporting foot at its corresponding end of the roller by said fastening arrangement attaching to the radially innermost surface of the bearing arrangement of the associated end plate. Further a rotating or translating force at the fastening arrangement in an opposite direction causes releasing of the fastening device and the supporting foot from the radially innermost surface of the bearing arrangement.

According to an embodiment of the present invention the fastening arrangement is operable by user by rotating a hand wheel of the fastening arrangement, the fastening arrangement further having a threaded portion. The threaded portion may be corresponding to an inter-relating threaded section at the radially innermost surface of the bearing arrangement, wherein the rotation of the fastening arrangement in one direction causing the fastening arrangement to thread in to the inter-relating threads to further fix the supporting foot at its corresponding end of the roller by said fastening arrangement attaching to the radially innermost surface of the bearing arrangement of the associated end plate and a rotation in an opposite direction causing the fastening arrangement to thread out of the inter-relating threads and releasing the supporting foot from the radially innermost surface of the bearing arrangement.

According to an embodiment of the present invention the fastening arrangement one or more of the supports may have a length different from another support. Further the supports may have removably fixable sections to allow for different lengths by fixing or removing of said sections or slidable extension arrangement to allow adjusting the length of the support.

According to an embodiment of the present invention fixing the first and the second support of the supporting feet to the end plate bearing arrangements with the fastening arrangements, said one or more of the supports having a length different from another support causing the roller to be aligned at a tilting angle relative to the supporting ground.

Some other preferable embodiments of the invention are described in the dependent claims.

Significant advantages can be achieved with the present invention when compared to the prior art solutions as a device is disclosed, being light and portable, user assemblable and operable, offering various exercise and massaging options applicable for various body regions not attainable with known devices of similar size, portability and operability.

### Short description of the drawings

Next, the invention is described in more detail with reference to the appended drawings, in which
Fig. 1 illustrates one embodiment of the assembled apparatus according to the present invention in three exemplary positions.
Fig. 2 illustrates details of one further embodiment of the apparatus according to the present invention.
Fig. 3 illustrates one further embodiment of the disassembled apparatus according to the present invention.
Fig. 4 illustrates one embodiment of a fastening arrangement of the assembled apparatus according to the present invention.
Fig. 5 illustrates one further embodiment of a fastening arrangement of the assembled apparatus according to the present invention.
Fig. 6 illustrates one further embodiment and details thereof of the assembled apparatus according to the present invention.

### Detailed description of the embodiments

The device according to the present invention will now be discussed in further detail by disclosing non-limiting embodiments for illustrative purposes with appropriate references to the appended drawings.

The supporting feet of the exercise roller device according to the present invention are removably fixable at corresponding receiving end plates of the roller, the roller in rotatable connection to the feet by the mediation of the bearing arrangements of the end plates.

The bearing arrangement of the exercise roller device according to the present invention may utilize one or more elements that bear the roller relative to the supporting feet by the mediation of the fastening arrangement and constrain relative motion and reduce friction between moving parts to only the desired motion, the desired motion being free rotation of the roller around a fixed axis relative to its supporting feet, further determined by the fastening arrangement and centrally situated bearing arrangement and the opening in communication with a radially innermost surface of the bearing arrangement. According to the present invention, the fastening arrangement fixes essentially at the proximity of this radially innermost surface of the bearing arrangement.

The bearing arrangement construction may include a ball bearing, a roller bearing, a plain bearing, bearing surfaces, cut or formed into a part, with varying degrees of control over the form, size, roughness and location of the surface etc.

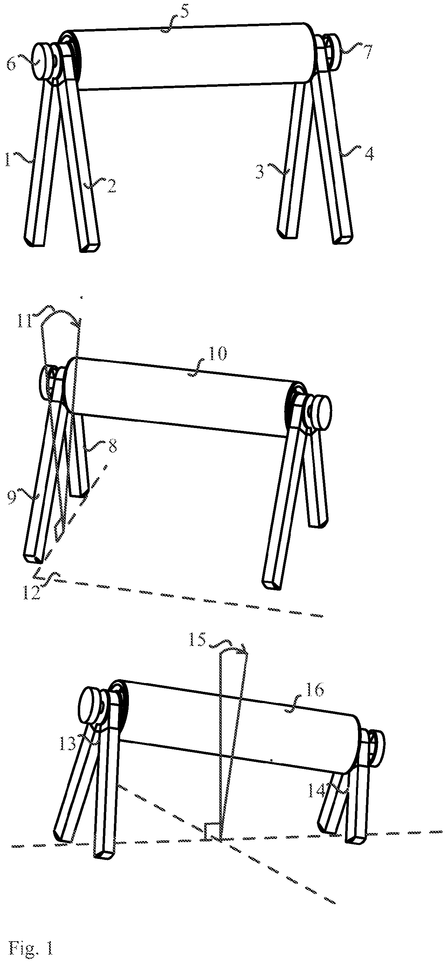

Fig. 1 illustrates one embodiment of the present invention, where two supporting feet each have two supports 1, 2 and 3, 4. The roller 5 is elevated by these supports from the supporting ground. According to one aspect of the invention, the roller is removably fixed to the supports constituting the two feet by a fastening arrangement of which Fig. 1 shows the visible thumb wheels 6, 7 which are user operable to fix or remove the feet from the roller. According to one further aspect of the invention, the fastening arrangement sets the supports relative to each other and further to the roller in such way that the roller may rotate relative to the supporting feet.

According to a further embodiment of the device according to the invention, the first support 8 of the supporting foot may have a length different from the second support 9 of that foot. The supports can be of different lengths or yielded to differ in length by using removably fixable sections or a slidable extension arrangement to allow adjusting the length of the support. The roller support feet fixed to the roller 10 according to such an embodiment has a leaning or tilting angle 11 relative the supporting ground 12. Further, for a roller 16, utilizing supports of a supporting foot 13 having a different length relative to the supports of the opposite supporting foot 14 may yield a leaning or tilting angle 15 perpendicular to the plane spanned by the angle 11. According to yet another aspect of the present invention, utilizing one or more lengths for the supports of the two supporting feet of the roller, an elevation height from and leaning angle relative to the supporting ground may be achieved, where the leaning angle can be any desired vector combination of said two angles 11 and 15.

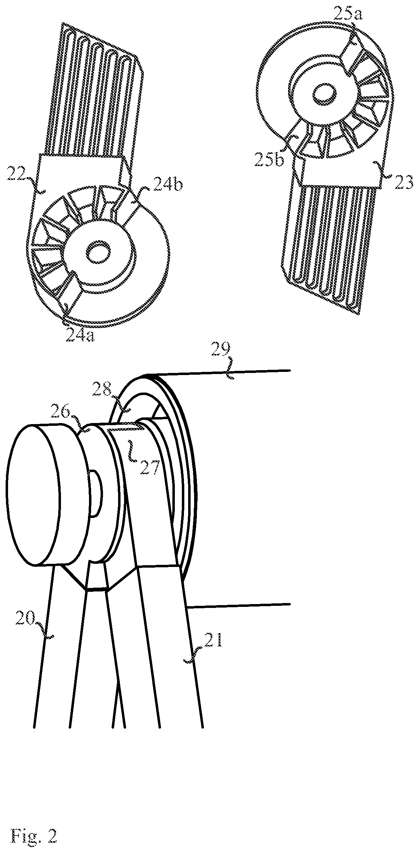

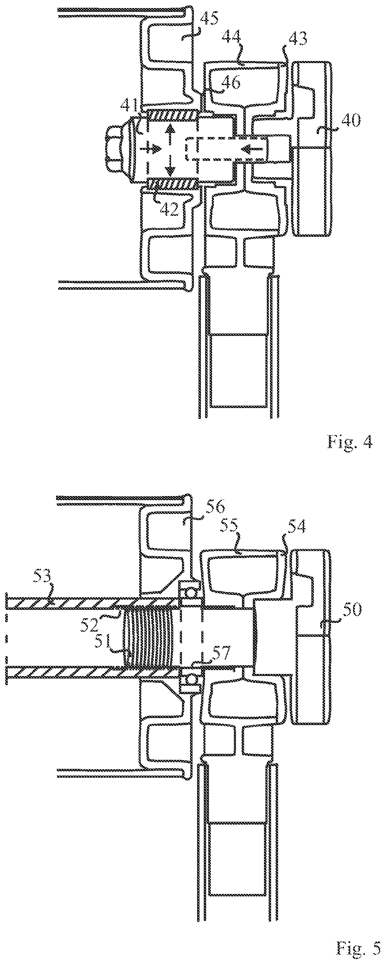

Fig. 2 shows a fixed support pair 20, 21 and an embodiment 22, 23 of the upper part 27, 28 of the supports. According to one aspect of the invention, the support foot shown in Fig. 2, the supports 20, 21 are alignable by receiving surfaces 24a, 25a and 24b, 25b residing at their ends 26, 27 and shown in embodiment 22, 23, to form a supporting foot. The supporting foot is removably fixable at the corresponding receiving end plate 28 of the roller 29, the roller in rotatable connection to the foot by the mediation of the bearing arrangement of the end plate, of which embodiments will be illustrated in Fig. 4 and Fig. 5.

Further, the supports 20, 21 may comprise different alignment means from the depicted alignment surfaces 24a, 25a, 24b, 25b. For example, the joining surfaces of the supports 20, 21 could have structures and shapes, such as corrugation, spines, or other such shapes, which would make the supports 20, 21 attach in one or more essentially predefined angles. However, such shapes are not exclusive and the joining surfaces could be also essentially planar wherein the supports 20, 21 are attached in essentially any angle by friction from tightening the supports in to each other by the fastening arrangement.

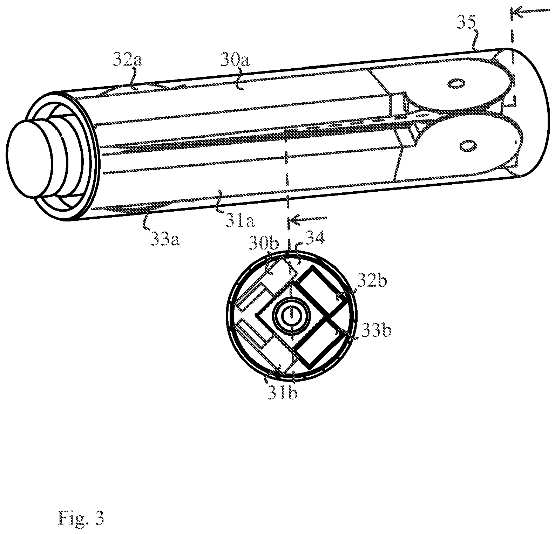

Fig. 3 illustrates the device according to the present invention and embodiments thereof, wherein upon removing supporting feet by operating the fastening arrangements and removing one of the end plates, the supports 30, 31, 32, 33 are inserted within the cavity 34 of the roller 35, for storage or transport.

In Fig. 4 according to one aspect of the invention, the fastening arrangement is operable by the user, by rotating a thumb wheel 40 to simultaneously compress an elastic friction member 41 to expand and fix against the inner surface of the bearing arrangement 42 and to pull together the first and second support 43, 44 fixing them relative to the fastening arrangement at the end plate 45, the radially innermost surface of the bearing arrangement being a surface of the innermost part of a concentric bearing 42 confined in the associated end plate 45. The corresponding surfaces of the support 44 and the end plate 45 may be in sliding contact as bearing surfaces at the boundary 46 or a plain bearing etc. may be utilized at the boundary 46, between the support and the end plate.

In Fig. 5 according to one further aspect of the invention, the fastening arrangement is operable by the user, by rotating a thumb wheel 50 of the fastening arrangement, the fastening arrangement further having a threaded portion 51 corresponding to an inter-relating threaded section 52 at the radially innermost surface of the bearing arrangement being a hollow tube 53, the radially innermost surface of the bearing arrangement being the inner surface of the hollow tube. The rotation of the fastening arrangement causes the fastening arrangement to thread in to the tube threads to pull together the first and second support 54, 55 and the end of the tube 53, and may further utilize a ball bearing 57 etc. between the support 55 and the end of the tube 53 against which the first and second support 54, 55 on one side and the end of the tube 53 on the opposite side of the bearing 57 are pulled.

The threaded section and the inter-relating threaded section thereof may be implemented as illustrated in Fig. 5, the fastening arrangement having an outer threaded section (male thread) and the radially innermost surface of the bearing arrangement having an inner thread (female thread). Even further according to one further aspect of the invention, the threads may be reversed, so that the fastening arrangement has a hollow section with inner threads and an inter-relating threaded section at the radially innermost surface of the bearing arrangement being an outer thread on the outer surface of a shaft, rod, tube etc. connecting the two end plates.

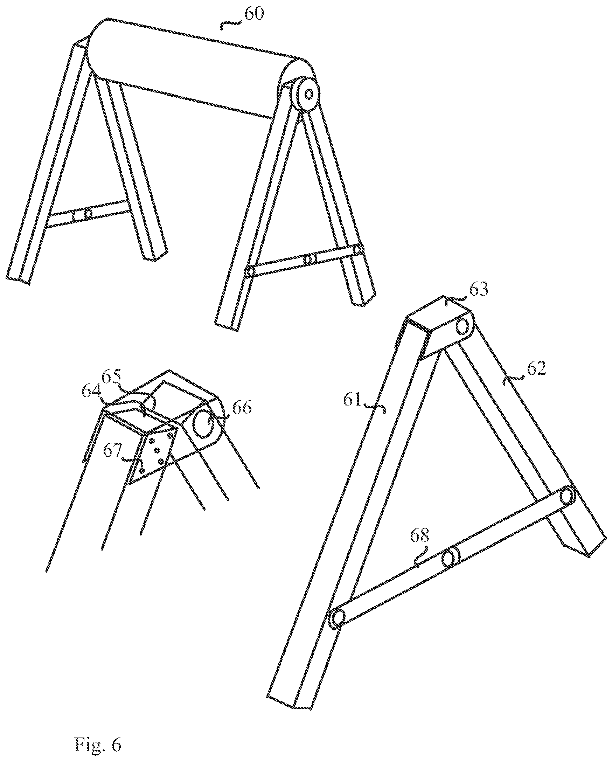

According to another embodiment of the invention in Fig. 6 the device 60 has two supporting feet, each having two supports 61, 62, the supports being foldably attached 63 at their one end having receiving surfaces 64, 65 residing at said one end and the attachment 63 being a clamp, hinge etc. and being further adapted to receive a bolt 66, fastening arrangement 67 etc. allowing the supports to be folded apart to one or more predefined angles to form a supporting foot and folded together for storage or transportation within the roller cavity. The supporting feet of the embodiment of Fig. 6 further has a linkage arrangement 68 to hold the support apart at one or more predefined angles.

The end plates and the supports may at least partially be constructed using glass or carbon fiber reinforced polyamides or nylon, polyoxymethylene etc. Parts of the supports, such as sections thereof, may be constructed using steel, aluminum etc. The bearing arrangements may use typical bearing construction and materials such as steel or suitable engineering plastics, such as mentioned above for example. The roller may be constructed using polyethylene, polypropylene etc. The roller may be covered either with a permanent covering or a changeable cover using for example Velcro-type attachment between the roller outer surface and covering inner surface. The used covering may be chosen for a desired elasticity or flexibility and may have raised, elevated, protruding, sunken or embedded patterns, ridges or sections on its outer surface to yield location or direction dependent variation to the pressure applied to a treated body section and parts thereof.

## Claims

1. A massaging device, comprising:
- a hollow cylindrical roller (5, 10, 16, 29, 35),
- two supporting feet each having a first and a second support (1, 2, 3, 4), **characterized in that** the device further comprises:
- two end plates (28, 45) fixable to the opposite ends of said roller wherein at least one of the end plates is removably fixed, the inner envelope of the roller and the end plates essentially defining a cavity and each of the end plates further comprising essentially centrally situated bearing arrangement, and that
- the first and the second support of the supporting feet are alignable at the end plates to set said supports at an angle relative to each other, and each of the supporting feet being removably fixable at their corresponding end of the roller by a fastening arrangement (6, 7) so that the supporting feet are at least functionally connected to the bearing arrangements of the associated end plates and the roller being rotatably fixed to or in relation the supporting feet, and wherein the rotation is done in relation to two separate axles at each end of the roller, and wherein the supports may be stored inside said cavity.

2. The device according to claim 1, wherein:
the radially innermost surface of the bearing arrangement is the inner surface of a hollow tube (53) connecting the two associated end plates (28,45).

3. The device according to claim 1, wherein:
the radially innermost surface of the bearing arrangement is the outer surface of a shaft connecting the two associated end plates (28,45).

4. The device according to claim 1, wherein:
the radially innermost surface of the bearing arrangement is a surface of the innermost part of a concentric bearing (42) confined in the associated end plate (28,45).

5. The device according to claim 1, wherein:
the fastening arrangement is operable by a user directing a rotating or translating force at the fastening arrangement in one direction to shorten a relative distance between a first and a second part of said fastening arrangement causing compression of length and expansion of width of an elastic member residing between said first and second part, the rotating or translating force at the fastening arrangement in said one direction fixing the fastening device relative to the radially innermost surface of the bearing arrangement by friction between the expanded elastic member and the radially innermost surface of the bearing arrangement and further fixing the supporting foot at its corresponding end of the roller (5, 10, 16, 29, 35 ) by said fastening arrangement attaching to the radially innermost surface of the bearing arrangement of the associated end plate, and a rotating or translating force at the fastening arrangement in an opposite direction releasing the fastening device and the supporting foot from the radially innermost surface of the bearing arrangement.

6. The device according to claim 1, wherein:
the fastening arrangement is operable by user by rotating a hand wheel of the fastening arrangement, the fastening arrangement further having a threaded portion (51) corresponding to an inter-relating threaded section (52) at the radially innermost surface of the bearing arrangement, the rotation of the fastening arrangement in one direction causing the fastening arrangement to thread in to the inter-relating threads to further fix the supporting foot at its corresponding end of the roller ( 5, 10, 16, 29, 35) by said fastening arrangement attaching to the radially innermost surface of the bearing arrangement of the associated end plate (28,45), and a rotation in an opposite direction causing the fastening arrangement to thread out of the inter-relating threads (52) and releasing the supporting foot from the radially innermost surface of the bearing arrangement.

7. The device according to claim 1, wherein:
one or more of the supports (1, 2, 3, 4, 8, 9, 20, 21, 61, 62) has a length different from another support (1, 2, 3, 4, 8, 9, 20, 21, 61, 62), has removably fixable sections to allow for different lengths by fixing or removing of said sections or has a slidable extension arrangement to allow adjusting the length of the support ( 1, 2, 3, 4, 8, 9, 20, 21, 61, 62).

8. The device according to claim 7, wherein:
fixing the first and the second support of the supporting feet to the end plate (28,45) bearing arrangements with the fastening arrangements, said one or more of the supports (1, 2, 3, 4, 8, 9, 20, 21, 61, 62) having a length different from another support (1, 2, 3, 4, 8, 9, 20, 21, 61, 62) causing the roller ( 5, 10, 16, 29, 35) to be aligned at a tilting angle relative to the supporting ground.

## Patentansprüche

1. Massagevorrichtung, umfassend:
- eine hohlzylindrische Rolle (5, 10, 16, 29, 35),
- zwei Stützfüße mit jeweils einem ersten und einem zweiten Träger (1, 2, 3, 4)
**dadurch gekennzeichnet, dass** die Vorrichtung ferner umfasst:
- zwei Endplatten (28, 45), die an den gegenüberliegenden Enden der Rolle fixierbar sind, wobei mindestens eine der Endplatten entfernbar fixiert ist, die innere Hülle der Rolle und die Endplatten im Wesentlichen einen Hohlraum definieren und jede der Endplatten ferner im Wesentlichen eine zentral gelegene Lageranordnung umfassen, und dass
- der erste und der zweite Träger der Stützfüße sich derart auf die Endplatten ausrichten lässt, dass die Träger sich in einem Winkel relativ zueinander befinden, und jeder der Stützfüße entfernbar an seinem jeweiligen Ende der Rolle mit einer Befestigungsanordnung (6, 7) derart fixierbar ist,
dass die Stützfüße mindestens funktional mit der Lageranordnung der zugeordneten Endplatten verbunden sind und die Rolle drehbar zu oder in Bezug auf die Stützfüße fixiert ist, und wobei die Drehung in Bezug auf zwei separate Achsen an jedem Ende der Rolle erfolgt, und wobei die Träger innerhalb des Hohlraums gelagert werden können.

2. Vorrichtung nach Anspruch 1, wobei die radial innerste Fläche der Lageranordnung die innere Fläche eines Hohlrohres (53) ist, das die beiden zugeordneten Endplatten (28, 45) verbindet.

3. Vorrichtung nach Anspruch 1, wobei
die radial innerste Fläche der Lageranordnung die äußere Fläche einer Welle ist, die die beiden zugeordneten Endplatten (28, 45) verbindet.

4. Vorrichtung nach Anspruch 1, wobei
die radial innerste Fläche der Lageranordnung eine Fläche des innersten Teils eines konzentrischen Lagers ist, das in der zugeordneten Endplatte (28, 45) eingeschlossen ist.

5. Vorrichtung nach Anspruch 1, wobei
die Befestigungsanordnung von einem Benutzer durch Leiten einer Dreh- oder Übersetzungskraft an der Befestigungsanordnung in eine Richtung zur Verkürzung der relativen Distanz zwischen einem ersten und einem zweiten Teil der Befestigungsanordnung bedienbar ist, so dass eine Kompression der Länge und eine Expansion der Breite eines elastischen Glieds, das sich zwischen dem ersten und dem zweiten Teil befindet, bewirkt wird, wobei die Dreh- oder Übersetzungskraft an der Befestigungsanordnung in der einen Richtung die Befestigungsvorrichtung in Bezug auf die radial innerste Fläche der Trägeranordnung durch Friktion zwischen dem expandierten, elastischen Glied und der radial innersten Fläche der Trägeranordnung fixiert und ferner den Stützfuß an seinem entsprechenden Ende der Rolle (5, 10, 16, 29, 35) dadurch fixiert, dass die Befestigungsanordnung an der radial innersten Fläche der Trägeranordnung der zugeordneten Endplatte befestigt wird, und eine Dreh- oder Übersetzungskraft an der Befestigungsvorrichtung in eine entgegengesetzte Richtung die Befestigungsvorrichtung und den Stützfuß von der radial innersten Fläche der Trägeranordnung löst.

6. Vorrichtung nach Anspruch 1, wobei
die Befestigungsanordnung von einem Benutzer durch Drehen eines Handrads der Befestigungsanordnung bedienbar ist, wobei die Befestigungsanordnung ferner über einen Gewindeabschnitt verfügt, der einem in Beziehung stehendem Gewindeabschnitt an der radial innersten Fläche der Trägeranordnung entspricht, wobei die Drehung der Befestigungsanordnung in eine Richtung bewirkt, dass die Befestigungsanordnung in die in Beziehung stehende Gewinde gewunden wird, so dass der Stützfuß an seinem entsprechenden Ende der Rolle (5, 10, 16, 29, 35) durch das Befestigen der Befestigungsvorrichtung an der radial innersten Fläche der Trägeranordnung der zugeordneten Endplatte (28, 45) ferner fixiert wird, und eine Drehung in eine entgegengesetzte Richtung bewirkt, dass die Befestigungsanordnung aus den in Beziehung stehenden Gewinden (52) gewunden wird und den Stützfuß von der radial innersten Fläche der Trägeranordnung löst.

7. Vorrichtung nach Anspruch 1, wobei
einer oder mehrere der Träger (1, 2, 3, 4, 8, 9, 20, 21, 61, 62) eine Länge aufweist, die sich von dem anderen Träger (1, 2, 3, 4, 8, 9, 20, 21, 61, 62) unterscheidet, entfernbar fixierbare Abschnitte aufweist, so dass durch Fixieren oder Entfernen der Abschnitte unterschiedliche Längen ermöglicht werden, oder eine verschiebbare Verlängerungsanordnung aufweist, die es ermöglicht, die Länge des Trägers (1, 2, 3, 4, 8, 9, 20, 21, 61, 62) zu verstellen.

8. Vorrichtung nach Anspruch 7, wobei
das Fixieren des ersten und des zweiten Trägers der Stützfüße an die Endplatte (28, 45) Trägeranordnung mit den Befestigungsanordnungen, wobei der eine oder die mehreren Träger (1, 2, 3, 4, 8, 9, 20, 21, 61, 62) eine andere Länge hat bzw. haben als ein anderer Träger (1, 2, 3, 4, 8, 9, 20, 21, 61, 62), wodurch bewirkt wird, dass die Rolle (5, 10, 16, 29, 35) in einem geneigten Winkel in Bezug auf den stützenden Boden ausgerichtet ist.

## Revendications

1. Dispositif de massage comprenant :
- un rouleau cylindrique creux (5, 10, 16, 29, 35),
- deux pieds de support ayant chacun un premier et un deuxième support (1, 2, 3, 4), **caractérisé en ce que** le dispositif comprend en outre :
- deux plaques d'extrémité (28, 45) pouvant être fixées aux extrémités opposées dudit rouleau, dans lequel au moins l'une des plaques d'extrémité est fixée de façon amovible, l'enveloppe interne du rouleau et les plaques d'extrémité définissant sensiblement une cavité et chacune des plaques d'extrémité comprenant en outre un dispositif de palier situé sensiblement centralement, et **en ce que**
- les premier et deuxième supports des pieds de support peuvent être alignés au niveau des plaques d'extrémités pour mettre lesdits supports selon un angle l'un par rapport à l'autre, et chacun des pieds de support pouvant être fixé de façon amovible au niveau de leur extrémité correspondante du rouleau grâce à un dispositif de fixation (6, 7) de manière à ce que les pieds de support soient reliés au moins fonctionnellement aux dispositifs de palier des plaques d'extrémité associées et le rouleau étant fixé de façon rotative aux pieds de support ou en relation avec ceux-ci, et dans lequel la rotation est effectuée en relation avec deux axes séparés à chaque extrémité du rouleau, et dans lequel les supports peuvent être stockés à l'intérieur de ladite cavité.

2. Dispositif selon la revendication 1, dans lequel :
la surface radialement la plus à l'intérieur du dispositif de palier est la surface interne d'un tube creux (53) reliant les deux plaques d'extrémité (28, 45) associées.

3. Dispositif selon la revendication 1, dans lequel :
la surface radialement la plus à l'intérieur du dispositif de palier est la surface externe d'un arbre reliant les deux plaques d'extrémité (28, 45) associées.

4. Dispositif selon la revendication 1, dans lequel :
la surface radialement la plus à l'intérieur du dispositif de palier est une surface de la partie la plus à l'intérieur d'un palier concentrique (42) confiné dans la plaque d'extrémité (28, 45) associée.

5. Dispositif selon la revendication 1, dans lequel :
le dispositif de fixation peut être actionné par un utilisateur dirigeant une force de rotation ou de translation au niveau du dispositif de fixation dans une direction pour raccourcir une distance relative entre une première et une deuxième partie dudit dispositif de fixation en provoquant une compression de la longueur et une dilatation en largeur d'un élément élastique résidant entre lesdites première et deuxième parties, la force de rotation ou de translation au niveau du dispositif de fixation dans ladite direction fixant le dispositif de fixation par rapport à la surface radialement la plus à l'intérieur du dispositif de palier par friction entre l'élément élastique dilaté et la surface radialement la plus à l'intérieur du dispositif de palier et fixant en outre le pied de support à son extrémité correspondante du rouleau (5, 10, 16, 29, 35) grâce audit dispositif de fixation s'attachant à la surface radialement la plus à l'intérieur du dispositif de palier de la plaque d'extrémité associée, et une force de rotation ou de translation au niveau du dispositif de fixation dans une direction opposée libérant le dispositif de fixation et le pied de support de la surface radialement la plus à l'intérieur du dispositif de palier.

6. Dispositif selon la revendication 1, dans lequel :
le dispositif de fixation peut être actionné par un utilisateur par rotation d'un volant à main du dispositif de fixation, le dispositif de fixation ayant en outre une partie filetée (51) correspondant à une section filetée d'interrelation (52) au niveau de la surface radialement la plus à l'intérieur du dispositif de palier, la rotation du dispositif de fixation dans une direction faisant en sorte que le dispositif de fixation s'enfile dans les filetages d'interrelation pour davantage fixer le pied de support au niveau de son extrémité correspondante du rouleau (5, 10, 16, 29, 35) grâce audit dispositif de fixation s'attachant à la surface radialement la plus à l'intérieur du dispositif de palier de la plaque d'extrémité associée (28, 45), et une rotation dans une direction opposée faisant en sorte que le dispositif de fixation soit désenfilé des filetages d'interrelation (52) et libérant le pied de support de la surface radialement à plus à l'intérieur du dispositif de palier.

7. Dispositif selon la revendication 1, dans lequel :
un ou plusieurs des supports (1, 2, 3, 4, 8, 9, 20, 21, 61, 62) ont une longueur différente de celle d'un autre support (1, 2, 3, 4, 8, 9, 20, 21, 61, 62),
ont des sections pouvant être fixées de façon amovible pour permettre différentes longueurs par fixation ou retrait desdites sections, ou ont un dispositif d'extension coulissant pour permettre l'ajustement de la longueur du support (1, 2, 3, 4, 8, 9, 20, 21, 61, 62).

8. Dispositif selon la revendication 7, dans lequel :
on fixe les premier et deuxième supports des pieds de support aux dispositifs de palier de la plaque d'extrémité (28, 45) avec les dispositifs de fixation, ledit un ou lesdits plusieurs des supports (1, 2, 3, 4, 8, 9, 20, 21, 61, 62) ayant une longueur différente de celle d'un autre support (1, 2, 3, 4, 8, 9, 20, 21, 61, 62) faisant en sorte que le rouleau (5, 10, 16, 29, 35) soit aligné selon un angle d'inclinaison par rapport au sol de support.
